(19) **Europäisches Patentamt / European Patent Office / Office européen des brevets**

(11) **EP 4 467 231 A1**

(12) **EUROPEAN PATENT APPLICATION**
published in accordance with Art. 153(4) EPC

(43) Date of publication:
**27.11.2024 Bulletin 2024/48**

(21) Application number: **22922021.5**

(22) Date of filing: **26.10.2022**

(51) International Patent Classification (IPC):
**B01D 69/00** (2006.01)      **B01D 69/10** (2006.01)
**B01D 69/12** (2006.01)      **B01D 71/36** (2006.01)
**C08J 9/00** (2006.01)

(52) Cooperative Patent Classification (CPC):
**B01D 69/10; B01D 67/0018; B01D 67/002;**
**B01D 69/00; B01D 69/02; B01D 69/12;**
**B01D 69/1213; B01D 71/36; B32B 27/322;**
**C08J 9/00;** B01D 2325/02; B01D 2325/20;
B01D 2325/22; B01D 2325/34; B32B 5/32

(86) International application number:
**PCT/JP2022/039923**

(87) International publication number:
**WO 2023/139869 (27.07.2023 Gazette 2023/30)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **20.01.2022 JP 2022007435**

(71) Applicants:
• **Sumitomo Electric Fine Polymer, Inc.**
  **Sennan-gun, Osaka 590-0458 (JP)**
• **Sumitomo Electric Industries, Ltd.**
  **Osaka-shi, Osaka 541-0041 (JP)**

(72) Inventors:
• **KATAYAMA, Hirokazu**
  **Osaka-shi, Osaka 541-0041 (JP)**
• **FUKUNAGA, Atsushi**
  **Osaka-shi, Osaka 541-0041 (JP)**
• **HASHIMOTO, Takamasa**
  **Sennan-gun, Osaka 590-0458 (JP)**
• **CHINO, Kanako**
  **Sennan-gun, Osaka 590-0458 (JP)**
• **TSUJIWAKI, Hiroyuki**
  **Sennan-gun, Osaka 590-0458 (JP)**

(74) Representative: **Boult Wade Tennant LLP**
  **Salisbury Square House**
  **8 Salisbury Square**
  **London EC4Y 8AP (GB)**

(54) **POROUS MEMBRANE AND POROUS MEMBRANE LAMINATE**

(57) A porous membrane according to the present disclosure is composed mainly of polytetrafluoroethylene, wherein the mean flow pore size E is 75 nm or less, and the pore size difference G-E between the maximum pore size G and the mean flow pore size E is not more than 20 nm.

FIG.1

EP 4 467 231 A1

**Description**

TECHNICAL FIELD

The present disclosure relates to a porous membrane and a porous membrane laminate. This application claims priority based on Japanese Patent Application No. 2022-007435 filed on January 20, 2022, and the entire contents of the Japanese patent application are incorporated herein by reference.

BACKGROUND ART

The porous membrane using polytetrafluoroethylene has characteristics of polytetrafluoroethylene such as high heat resistance, chemical stability, weather resistance, flame resistance, high strength, non-adhesiveness, and low friction coefficient, and porous characteristics such as flexibility, dispersing medium permeability, particle-capturing property, and low dielectric constant. Thus, the porous membrane containing polytetrafluoroethylene as a main component is widely used as a microfiltration filter for a dispersing medium and a gas in semiconductor-associated fields, liquid crystal related fields, and food and medical related fields. In the related technology, as a filtration filter, a porous membrane laminate using a porous membrane containing PTFE as a main component, which can capture fine particles having a particle size of less than 0.1 $\mu$m, has been proposed in recent years (refer to Japanese Unexamined Patent Application Publication No. 2010-94579).

CITATION LIST

PATENT LITERATURE

Patent literature 1: Japanese Unexamined Patent Application Publication No. 2010-94579

SUMMARY OF THE INVENTION

A porous membrane according to an aspect of the present disclosure is a porous membrane containing polytetrafluoroethylene as a main component. A mean flow pore size E of the porous membrane is 75 nm or less, and a pore size difference (G - E) between a maximum pore size G and mean flow pore size E of the porous membrane is 20 nm or less.

BRIEF DESCRIPTION OF THE DRAWINGS

FIG. 1 is a schematic and partial cross-sectional view showing a porous membrane according to one embodiment of the present disclosure.
FIG. 2 is a schematic and partial cross-sectional view showing an example of a porous membrane laminate according to one embodiment of the present disclosure.
FIG. 3 is a schematic and partial cross-sectional view showing another example of the porous membrane laminate according to one embodiment of the present disclosure.
FIG. 4 is an image of a cross section of the porous membrane laminate of Test No. 1 taken using a scanning electron microscope.
FIG. 5 is an image of a cross section of the porous membrane laminate of Test No. 2 taken using a scanning electron microscope.
FIG. 6 is an image of a cross section of the porous membrane laminate of Test No. 3 taken using a scanning electron microscope.
FIG. 7 is an image of a cross section of the porous membrane laminate of Test No. 4 taken using a scanning electron microscope.
FIG. 8 is a schematic and partial cross-sectional view showing another example of the porous membrane laminate according to one embodiment of the present disclosure.
FIG. 9 is a schematic and partial cross-sectional view showing another example of the porous membrane laminate according to one embodiment of the present disclosure.
FIG. 10 is a schematic and partial cross-sectional view showing another example of the porous membrane laminate according to one embodiment of the present disclosure.
FIG. 11 is a schematic and partial cross-sectional view showing another example of the porous membrane laminate according to one embodiment of the present disclosure.

FIG. 12 is a schematic and partial cross-sectional view showing another example of the porous membrane laminate according to one embodiment of the present disclosure.

FIG. 13 is a schematic and partial cross-sectional view showing another example of the porous membrane laminate according to one embodiment of the present disclosure.

FIG. 14 is a schematic and partial cross-sectional view showing another example of the porous membrane laminate according to one embodiment of the present disclosure.

FIG. 15 is a schematic and partial cross-sectional view showing another example of the porous membrane laminate according to one embodiment of the present disclosure.

FIG. 16 is a schematic and partial cross-sectional view showing another example of the porous membrane laminate according to one embodiment of the present disclosure.

DETAILED DESCRIPTION

[Problems to be Solved by Present Disclosure]

In the above-mentioned fields, a microfiltration filter having higher performance is desired due to further technical innovation and an increase in requirements. Specifically, in the semiconductor field and the liquid crystal field, the degree of integration has been increased year by year, and the photoresist has been miniaturized to a region of 0.5 $\mu$m or less. Thus, a microfiltration filter capable of reliably capturing such fine particles is required. These microfiltration filters are mainly used as filters for treating the outside air of clean rooms, filtration filters for chemical solutions, and the like, and the performance thereof also affects the yield of products. Further, in the food and medical related fields, the recent increase in safety consciousness has led to a strong demand for removability of minute foreign matters.

The present disclosure has been made in view of the above circumstances, and an object of the present disclosure is to provide a porous membrane having excellent capturing performance for fine particles.

[Advantageous Effects of Present Disclosure]

According to the present disclosure, a porous membrane having excellent capturing performance for fine particles can be provided.

[Description of Embodiments of Present Disclosure]

First, embodiments of the present disclosure will be listed and described.

(1) A porous membrane according to an aspect of the present disclosure is a porous membrane containing polytetrafluoroethylene as a main component. A mean flow pore size E of the porous membrane is 75 nm or less, and a pore size difference G - E between a maximum pore size G and mean flow pore size E of the porous membrane is 20 nm or less.

The porous membrane contains polytetrafluoroethylene (hereinafter, also referred to as PTFE) as a main component and the gap between the adjacent molecules of polytetrafluoroethylene serves as a pore size. When the upper limit of the mean flow pore size of the porous membrane is 75 nm, fine particles easily collide with the fibers, and thus the porous membrane has excellent capturing performance for fine particles. Further, when the difference G - E between maximum pore size G and mean flow pore size E of the porous membrane (hereinafter referred to as pore size difference) is 20nm or less, the variation in pore size is small and the accuracy of the filtration treatment is improved. The "main component" refers to a component having the highest content in terms of mass, for example, a component having a content of 90% by mass or more, preferably 95% by mass or more.

(2) In (1), in the porous membrane, it is preferable that the pore size difference between maximum pore size G and mean flow pore size E is 15 nm or less. When the pore size difference between maximum pore size G and mean flow pore size E of the porous membrane is 15 nm or less, the variation in pore size can be further reduced, and the accuracy of the filtration treatment can be improved.

(3) In (1) or (2), in the porous membrane, it is preferable that a percentage $\{(G - E)/E\} \times 100$ (hereinafter also referred to as pore size ratio) of the pore size difference between maximum pore size G and mean flow pore size E relative to mean flow pore size E is 35% or less. When the pore size ratio of the porous membrane is 35% or less, the variation in pore size can be further reduced, and the accuracy of the filtration treatment can be improved.

The "mean flow pore size", "pore size difference (G - E)" and "pore size ratio $\{( G - E)/E\} \times 100$" can be calculated from the pore-size distribution measured by a fine pore diameter distribution measuring apparatus (for example, a Perm-Porometer "CFP-1500A" manufactured by PMI Co.) using propylene, 1,1,2,3,3,3-hexahydrofluoric acid oxide having a surface tension of 15.9mN/m as a reagent in accordance with ASTM F316-03 and JIS-K3832 (1990) as described later.

(4) It is preferable that a porous membrane laminate according to another aspect of the present disclosure includes one or a plurality of porous membranes according to (1) to (3), a mean flow pore size K of the porous membrane laminate is 75 nm or less, and a pore size difference J - K between a maximum pore size J and mean flow pore size K of the porous membrane laminate is 20 nm or less. The porous membrane laminate is provided with the porous membrane, and therefore, is excellent in capturing performance for fine particles, and is suitable as a microfiltration filter. When the upper limit of the mean flow pore size of the porous membrane laminate is 75 nm, fine particles easily collide with the fibers, and thus the porous membrane laminate has excellent capturing performance for fine particles. Further, when mean flow pore size K of the porous membrane laminate is 75 nm or less and pore size difference J - K between maximum pore size J and mean flow pore size K is 20 nm or less, the variation in pore size is small and the accuracy of the filtration treatment is improved.

(5) In (4), in the porous membrane laminate, it is preferable that a percentage $\{(J - K)/K\} \times 100$ of the pore size difference between maximum pore size J and mean flow pore size K relative to mean flow pore size K is 35% or less. When the pore size ratio of the porous membrane laminate is 35% or less, the variation in pore size can be reduced, and the accuracy of the filtration treatment of the porous membrane laminate can be further improved.

(6) In (4) or (5), it is preferable that the porous membrane laminate includes one or a plurality of porous support membranes containing polytetrafluoroethylene as a main component, wherein the one or plurality of support membranes are stacked on one surface or both surfaces of each of the one or plurality of porous membranes. The porous membrane laminate includes one or a plurality of porous support membranes and the support membrane is stacked on one surface or both surfaces of the porous membrane, so that the support membrane functions as a protective member for the porous membrane, and thus the porous membrane laminate can improve the mechanical strength and the lifespan of the porous membrane laminate while improving the capturing performance. In addition, the support membrane contains polytetrafluoroethylene as a main component, and thus heat resistance, chemical stability, and the like can be improved.

(7) In (6), it is preferable that each of the support membranes has a mean flow pore size of 200 nm or less. When the mean flow pore size of the support membrane is 200 nm or less, the capturing performance for fine particles in the porous membrane laminate can be further improved.

(8) In (6) or (7), it is preferable that the porous membrane laminate includes a plurality of the porous membranes and a plurality of the support membranes, wherein the porous membranes and the support membranes are alternately stacked, and the support membranes are stacked on both ends of the porous membrane laminate. In the porous membrane laminate, the porous membrane and the support membrane are alternately stacked, and the support membrane is stacked on both ends of the porous membrane laminate, so that the capturing performance, mechanical strength and lifespan of the porous membrane laminate can be further improved.

(9) In any one of (4) to (8), it is preferable that mean flow pore size K of the porous membrane laminate is 60 nm or less. When the mean flow pore size of the porous membrane laminate is 60 nm or less, the capturing performance for fine particles in the porous membrane laminate can be further improved.

[Details of Embodiments of Present Disclosure]

Hereinafter, preferred embodiments of the present disclosure will be described with reference to the drawings.

<Porous Membrane>

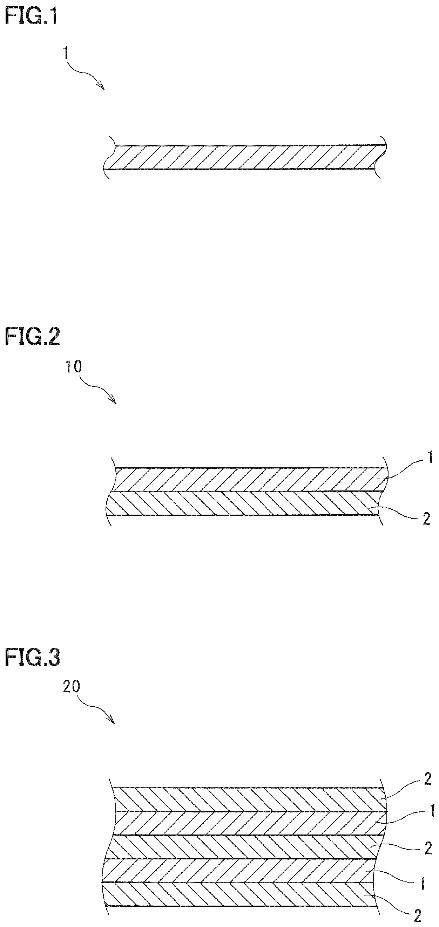

FIG. 1 is a schematic and partial cross-sectional view of a porous membrane according to one embodiment of the present disclosure. A porous membrane 1 is formed of a biaxially-stretching porous membrane containing polytetrafluoroethylene as a main component. The biaxially-stretching porous membrane is made porous by stretching a surface of the sheet containing PTFE as a main component in two directions orthogonal to each other. Porous membrane 1 allows the filtered liquid to permeate in the thickness direction while preventing the permeation of fine impurities.

The PTFE powder preferably has a high molecular weight. By using the PTFE powder having a high molecular weight, growth of fibrous skeleton can be promoted while preventing excessive expansion of pores and cleavage of the sheet during stretching. In addition, the number of nodes in the sheet can be reduced, and a porous membrane in which minute pores are densely formed can be formed.

The PTFE powder preferably has a high molecular weight. By using the PTFE powder having a high molecular weight, growth of fibrous skeleton can be promoted while preventing excessive expansion of pores and cleavage of the membrane during stretching. In addition, the number of nodes in the membrane can be reduced, and a porous membrane in which minute pores are densely formed can be formed.

The lower limit of the number-average molecular weight of the PTFE powder forming porous membrane 1 is preferably 12 million, and more preferably 20 million. On the other hand, the upper limit of the number-average molecular weight of the PTFE powder forming porous membrane 1 is preferably 50 million, and more preferably 40 million. When the number-average molecular weight of the PTFE powder forming porous membrane 1 is less than the lower limit, the pore size of porous membrane 1 increases, and the accuracy of the filtration treatment may decrease. On the other hand, when the number-average molecular weight of the PTFE powder forming porous membrane 1 exceeds the upper limit, there is a possibility that the membrane is difficult to form. It is noted that, the "number-average molecular weight" is determined from the specific gravity of the molded body, but the molecular weight of PTFE varies greatly depending on the measurement method and is difficult to measure accurately, and therefore, the number-average molecular weight may not be in the above range depending on the measurement method.

The lower limit of the average thickness of porous membrane 1 is preferably 2 $\mu$m, and more preferably 5 $\mu$m. On the other hand, the upper limit of the average thickness of porous membrane 1 is preferably 50 $\mu$m, and more preferably 40 $\mu$m. When the average thickness is less than the lower limit, the strength of porous membrane 1 may be insufficient. On the other hand, when the average thickness exceeds the upper limit, porous membrane 1 becomes unnecessarily thick, and the pressure loss during the permeation of the filtered liquid may be increased. When the average thickness of porous membrane 1 is within the above range, the strength of porous membrane 1 and the filtration treatment efficiency can be both achieved. "Average thickness" refers to the average value of the thickness of any 10 points and is measured using a standard digital thickness gauge.

The upper limit of a mean flow pore size E of porous membrane 1 is 75 nm or less, and more preferably 70.0 nm or less. When the upper limit of mean flow pore size E of porous membrane 1 is 75 nm or less, porous membrane 1 has excellent capturing performance for fine particles. On the other hand, the lower limit of the mean flow pore size of porous membrane 1 is preferably 25.0 nm or more, and more preferably 35.0 nm or more. When mean flow pore size E of porous membrane 1 is less than the lower limit, the pressure loss of porous membrane 1 may increase. Mean flow pore size E of porous membrane 1 can be adjusted by selecting, for example, the molecular weight, the difference between the onset temperature and the endset temperature of the peak in the range of 300°C to 360°C of the melting curve of the first run in thermal analysis of the raw material with a differential scanning calorimeter (DSC), the stretching ratio, and the like of PTFE as a raw material. Mean flow pore size E of porous membrane 1 is preferably 25.0 nm to 75 nm, and more preferably 35.0 nm to 70.0 nm.

The upper limit of a pore size difference G - E between maximum pore size G and mean flow pore size E of porous membrane 1 is 20 nm or less, and may be 15 nm or less. When the pore size difference of porous membrane 1 is 20 nm or less, the variation in pore size of the laminate is small, and the accuracy of the filtration treatment can be improved. The pore size ratio of porous membrane 1 can be adjusted by selecting, for example, the molecular weight, the difference between the onset temperature and the endset temperature of the peak in the range of 300°C to 360°C of the melting curve of the first run in the thermal analysis of the raw material with a differential scanning calorimeter (DSC), the stretching speed, and the like of PTFE as a raw material.

The upper limit of the percentage of the difference between maximum pore size G and mean flow pore size E to mean flow pore size E of porous membrane 1, that is, {(G - E)/E} $\times$ 100 (pore size ratio), may be 35% or less, or may be 20% or less. When the pore size ratio of porous membrane 1 is 35% or less, the variation in pore size can be further reduced, and the accuracy of the filtration treatment can be improved. The lower limit of the pore size ratio can be 10% or more, or 15% or more. The pore size ratio can be 10% to 35%, or 10% to 20%. The pore size ratio of porous membrane 1 can be adjusted by selecting, for example, the molecular weight, the difference between the onset temperature and the endset temperature of the peak in the range of 300°C to 360°C of the melting curve of the first run in the thermal analysis of the raw material with a differential scanning calorimeter (DSC), the stretching speed, and the like of PTFE as a raw material.

The upper limit of the Gurley number of porous membrane 1 is preferably 100 seconds, and more preferably 80 seconds. When the Gurley number exceeds the upper limit, the filtration efficiency of porous membrane 1 may be reduced. On the other hand, the lower limit of the Gurley number is preferably 1 second, and more preferably 3 seconds. When the Gurley number is less than the lower limit, the pore size of porous membrane 1 becomes too large, and thus the capturing performance for fine particles may be deteriorated. The term "Gurley number" is measured in accordance with JIS-P8117 (2009) and means the time required for air of 100 cm$^3$ to pass through a sample of 6.42 cm$^2$ at an average differential pressure of 1.22 kPa.

The upper limit of the porosity of porous membrane 1 is preferably 90%, and more preferably 85%. On the other hand, the lower limit of the porosity of porous membrane 1 is preferably 40%, and more preferably 50%. When the porosity of porous membrane 1 exceeds 90%, the capturing performance for fine particles in porous membrane 1 may be insufficient. On the other hand, when the porosity of porous membrane 1 is less than 40%, the pressure loss of porous membrane 1 may increase. It is noted that, the term "porosity" refers to the percentage of the total volume of pores to the volume of the object, and can be determined by measuring the density of the object in accordance with ASTM-D-792.

Porous membrane 1 may contain, in addition to PTFE, other fluororesins and additives within a range not impairing the desired effects of the present disclosure.

[Method of Producing Porous Membrane]

One embodiment of the method of manufacturing the porous membrane will be described. The method of manufacturing the porous membrane includes a step of molding a kneaded product of PTFE powder and a liquid lubricant, and a step of stretching the molded body.

(Molding Step)

In the forming step, a molded body in sheet form is produced by performing extrusion-molding of a kneaded product of PTFE powder produced by emulsion polymerization or the like and a liquid lubricant. The raw material PTFE particles are powder made of fine particles of PTFE. Examples of the PTFE powder include PTFE fine powder which is powder formed of fine particles of PTFE and is produced by emulsion polymerization and PTFE molding powder which is produced by suspension polymerization.

As the liquid lubricant, various lubricants conventionally used in extrusion methods can be used. Examples of the liquid lubricant include petroleum type solvents such as solvent naphtha and white oil, hydrocarbon oils such as undecan, aromatic hydrocarbons such as toluol and xylol, alcohols, ketones, esters, silicone oil, chlorofluorocarbon oil, solutions obtained by dissolving polymers such as polyisobutylene and polyisoprene in these solvents, and waters or aqueous solutions containing surface-active agents, and these can be used singly or in combination of two or more kinds. However, from the viewpoint of the uniformity of mixing, it is preferable to use a liquid lubricant of a single component.

The lower limit of the amount of the liquid lubricant mixed with respect to 100 parts by mass of the PTFE powder is preferably 10 parts by mass, and more preferably 16 parts by mass. On the other hand, the upper limit of the mixing amount of the liquid lubricant is preferably 40 parts by mass, and more preferably 25 parts by mass. When the mixing amount of the liquid lubricant is less than the lower limit, extrusion may be difficult. On the other hand, when the mixing amount of the liquid lubricant exceeds the upper limit, there is a concern that compression molding described below may be difficult.

The material for forming the porous membrane may contain other additives in addition to the liquid lubricant depending on the purpose. Examples of other additives include pigments for coloring, carbon black, graphite, silica powder, glass powder, glass fiber, inorganic fillers such as silicate and carbonate, metal powder, metal oxide powder, and metal sulfide powder for improving wear resistance, preventing cold flow, and facilitating pore formation. In order to assist the formation of the porous structure, a substance which is removed or decomposed by heating, extraction, dissolution or the like, for example, ammonium chloride, sodium chloride, plastic other than PTFE, rubber or the like may be blended in a powder or solution state.

In this step, first, the PTFE powder and the liquid lubricant are mixed, and then the mixture is compression-molded into a block body which is a primary molded body by a compression-molding machine. Next, the block body is extrusion-molded into a sheet form at a temperature of room temperature (for example, 25°C) to 50°C at a rate of, for example, 10 mm/min to 30 mm/min. Further, the sheet form body is rolled by a calender roll or the like to obtain a PTFE sheet having an average thickness of 250 $\mu$m to 350 $\mu$m.

The porous membrane has excellent permeability of the liquid lubricant and reduces the extrusion pressure during production.

The liquid lubricant contained in the PTFE sheet may be removed after the sheet is stretched, but is preferably removed before the sheet is stretched. The liquid lubricant can be removed by heating, extraction, dissolution, or the like. In the case of heating, the liquid lubricant can be removed by rolling the PTFE sheet with a heating roll at 130°C to 220°C, for example. When a liquid lubricant having a relatively high boiling point, such as silicone oil or chlorofluorocarbon oil, is used, the liquid lubricant is preferably removed by extraction.

(Stretching Step)

In this step, the PTFE sheet which is a molded body is biaxially stretched. By this step, pores are formed, and a porous membrane can be obtained. In this step, the PTFE sheet is sequentially stretched in the longitudinal direction (flow direction) and the lateral direction (width direction) orthogonal to the longitudinal direction to obtain a biaxially-stretching porous membrane.

The stretching of the PTFE sheet is preferably performed at a high temperature in order to densify the porous structure. The lower limit of the temperature during stretching is preferably 60°C, and more preferably 120°C. On the other hand, the upper limit of the temperature during stretching is preferably 300°C, and more preferably 280°C. When the temperature at the time of stretching is lower than the lower limit, the pore size may be too large. On the other hand, when the temperature at the time of stretching exceeds the upper limit, the pore size may become too small.

Further, the biaxially-stretching porous membrane is preferably subjected to heat fixing after stretching. By performing the heat fixing, the biaxially-stretching porous membrane can be prevented from shrinking, and the porous structure can be more reliably maintained. As a specific method of the heat fixing, for example, a method of fixing both ends of the biaxially-stretching porous membrane and holding the membrane at a temperature of 200°C to 500°C for 0.1 minutes to 20 minutes can be used. It is noted that, when the stretching is performed in multiple stages, heat fixing is preferably performed after each stage.

The structure of the porous membrane is as described above, and thus a repeated description thereof will be omitted.

The porous membrane is excellent in capturing performance for fine particles, and thus can be suitably used as a filter or the like that requires high filtration treatment accuracy.

<Porous Membrane Laminate >

The porous membrane laminate includes one or plurality of the porous membranes described above. The porous membrane laminate includes the porous membrane, and therefore, is excellent in capturing performance for fine particles, and is suitable as a microfiltration filter.

The upper limit of a mean flow pore size K of the porous membrane laminate is preferably 75 nm or less, more preferably 60 nm or less, and still more preferably 55 nm or less. When the upper limit of mean flow pore size K of the porous membrane laminate is 75 nm or less, the capturing performance for fine particles in the porous membrane laminate can be further improved. On the other hand, the lower limit of mean flow pore size K of the porous membrane laminate is preferably 25 nm or more, and more preferably 30 nm or more. When mean flow pore size K of the porous membrane laminate is less than the lower limit, the pressure loss of the porous membrane laminate may increase. Mean flow pore size K of the porous membrane laminate is preferably 25 nm to 75 nm, more preferably 25 nm to 60 nm, and further preferably 30 nm to 55 nm.

The upper limit of pore size difference J - K between maximum pore size J and mean flow pore size K in the porous membrane laminate is preferably 20 nm or less, and more preferably 18 nm or less. When the difference J - K between maximum pore size J and mean flow pore size K of the porous membrane laminate is 20 nm or less, the capturing performance for fine particles of the porous membrane laminate can be further improved. The lower limit of pore size difference J - K can be 17 nm or more, or 15 nm or more. Pore size difference J - K can be 17 nm to 20 nm, or 15 nm to 18 nm.

The upper limit of the percentage of the difference between maximum pore size J and mean flow pore size K to mean flow pore size K in the porous membrane laminate, that is, {(J - K)/K} × 100 (pore size ratio), is preferably 35% or less, and more preferably 33% or less. When the pore size ratio of the porous membrane laminate is 35% or less, the variation in pore size can be reduced, and the accuracy of the filtration treatment of the porous membrane laminate can be further improved. The lower limit of the pore size ratio can be set to 20% or more, or 23% or more. The pore size ratio can be 20% to 35%, or 23% to 33%.

The upper limit of the Gurley number of the porous membrane laminate is preferably 75 seconds, more preferably 70 seconds, and still more preferably 65 seconds. On the other hand, the lower limit of the Gurley number of the porous membrane laminate is preferably (1) second. When the Gurley number of the porous membrane laminate exceeds 75 seconds, the filtration cost of the porous membrane laminate may not be sufficiently reduced. On the other hand, when the Gurley number of the porous membrane laminate is less than the lower limit, the pore size of the porous membrane laminate becomes too large, and thus the capturing performance for fine particles may be deteriorated.

Preferably, the porous membrane laminate includes one or plurality of porous support membranes, and the support membrane is stacked on one surface or both surfaces of the porous membrane. Since the support membrane is stacked on one surface or both surfaces of the porous membrane, the support membrane functions as a protective member of the porous membrane, and thus the porous membrane laminate can improve the mechanical strength and the lifespan of the porous membrane laminate while improving the capturing performance. The support membrane preferably contains polytetrafluoroethylene as a main component. The support membrane containing polytetrafluoroethylene as a main component can improve heat resistance, chemical stability, and the like.

The upper limit of the mean flow pore size of the support membrane is preferably 200 nm or less, and more preferably 180 nm or less. When the mean flow pore size of the support membrane exceeds the 3000 nm, the strength of a support membrane 2 may be insufficient. On the other hand, the lower limit of the mean flow pore size of the support membrane is preferably 80 nm or more, and more preferably 100 nm or more. When the mean flow pore size of the support membrane is less than the lower limit, the pressure loss of the porous membrane laminate may increase. The mean flow pore size of the support membrane is preferably 80 nm to 200 nm, and more preferably 100 nm to 180 nm.

The upper limit of the average thickness of the support membrane is preferably 20 $\mu$m, and more preferably 15 $\mu$m. On the other hand, the lower limit of the average thickness of the support membrane is preferably 2 $\mu$m, and more preferably 5 $\mu$m. When the average thickness of the support membrane exceeds the upper limit, the pressure loss of the porous membrane laminate may increase. On the other hand, when the average thickness of support membrane 2 is less than the lower limit, the strength of the porous membrane laminate may be insufficient.

FIG. 2 is a schematic and partial cross-sectional view of a porous membrane laminate according to one embodiment of the present disclosure. Porous membrane laminate 10 shown in FIG. 2 includes porous membrane 1 and a porous support membrane 2 stacked on one surface of porous membrane 1. The expression "porous membrane laminate 10 includes porous membrane 1 and porous support membrane 2 stacked on one surface of porous membrane 1" can be rephrased as "porous membrane laminate 10 includes first porous membrane 1 formed of porous membrane 1 and first support membrane 2 containing polytetrafluoroethylene as a main component, and first porous membrane 1 is disposed on one main surface of first support membrane 2". Porous membrane laminate 10 includes porous support membrane 2 stacked on one surface of porous membrane 1, and porous membrane 1 is supported by support membrane 2, so that the mechanical strength can be improved and the filtration clogging can be suppressed.

The porous membrane laminate may have a three-layer structure, and for example, may have a total of three layers, which are a pair of support membranes disposed as the outermost layers and one porous membrane disposed between the pair of support membranes. Further, the porous membrane laminate may have a structure of four or more layers.

It is preferable that the porous membrane laminate comprises a plurality of the porous membranes and a plurality of the support membranes, the porous membranes and the support membranes are alternately stacked, and the support membranes being stacked on both ends of the porous membrane laminate. In the porous membrane laminate, the porous membrane and the support membrane are alternately stacked, and the support membranes are stacked on both ends of the porous membrane laminate, thereby further improving the capturing performance, mechanical strength, and lifespan of the porous membrane laminate.

When the porous membrane laminate has, for example, a five-layer structure, it is preferable that the porous membrane laminate includes a plurality of the porous membranes and a plurality of the support membranes, the porous membranes and the support membranes are alternately stacked, and the support membranes are stacked on both ends. FIG. 3 is a schematic and partial cross-sectional view of a porous membrane laminate according to another embodiment of the present disclosure. Porous membrane laminate 20 shown in FIG. 3 has a five-layer structure in which two layers of porous membranes 1 are stacked between a pair of support membranes 2 in the outermost layer, and support membrane 2 is further stacked between the pair of porous membranes 1. It is noted that, the expression "porous membrane laminate 20 has a five-layer structure in which two layers of porous membranes 1 are stacked between a pair of support membranes 2 in the outermost layers and support membrane 2 is further stacked between the pair of porous membranes 1" can be rephrased as "porous membrane laminate 20 comprises first porous membrane 1 formed of porous membrane 1, second porous membrane 1 formed of porous membrane 1, first support membrane 2 containing polytetrafluoroethylene as a main component, second support membrane 2 containing polytetrafluoroethylene as a main component, and third support membrane 2 containing polytetrafluoroethylene as a main component, and first porous membrane 1, second support membrane 2, second porous membrane 1, and third support membrane 2 are disposed in this order on one main surface of first support membrane 2". As described above, porous membranes 1 and support membranes 2 are alternately stacked, and support membranes 2 are stacked on both ends, thereby further improving the capturing performance, mechanical strength, and lifespan of porous membrane laminate 20. First porous membrane 1 and second porous membrane 1 may have the same structure or different structures. First support membrane 2, second support membrane 2, and third support membrane 2 may have the same structure or different structures.

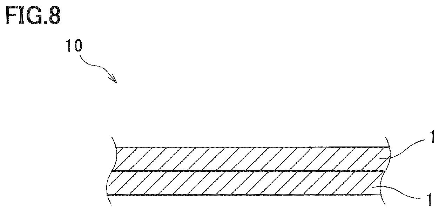

For example, as shown in FIG. 8, porous membrane laminate 10 comprises first porous membrane 1 formed of porous membrane 1 and second porous membrane 1 formed of porous membrane 1, and second porous membrane 1 may be disposed on one main surface of first porous membrane 1. Accordingly, the mechanical strength of porous membrane laminate 10 may be improved, and the capturing performance for fine particles (particle-capturing probability in fiber) may be improved. It is noted that, first porous membrane 1 and second porous membrane 1 may have the same structure or different structures.

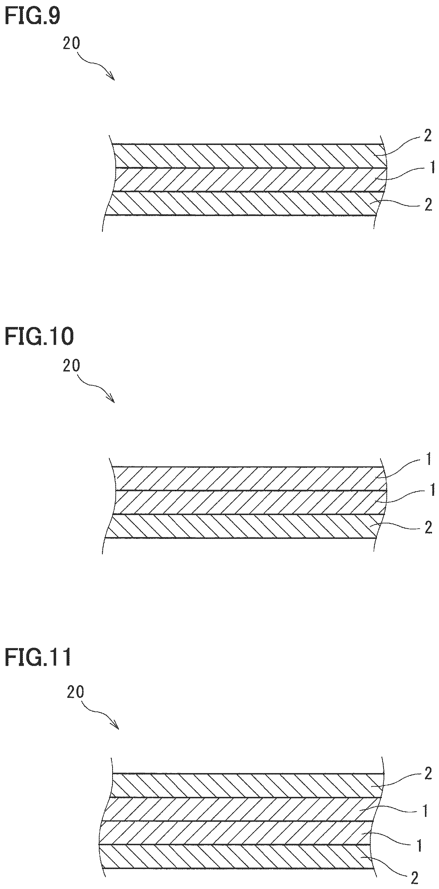

Further, for example, as shown in FIG. 9, porous membrane laminate 20 comprises first porous membrane 1 formed of porous membrane 1, first support membrane 2 containing polytetrafluoroethylene as a main component, and second support membrane 2 containing polytetrafluoroethylene as a main component, and first porous membrane 1 and second support membrane 2 may be arranged in this order on one main surface of first support membrane 2. This can improve the mechanical strength of porous membrane laminate 20, suppress filtration clogging, and suppress the particle-capturing performance from being lowered due to external damage. Here, first support membrane 2 and second support membrane 2 may have the same structure or different structures.

Further, for example, as shown in FIG. 10, porous membrane laminate 20 comprises first porous membrane 1 formed of porous membrane 1, second porous membrane 1 formed of porous membrane 1, and first support membrane 2 containing polytetrafluoroethylene as a main component, and first porous membrane 1 and second porous membrane 1 can be arranged in this order on one main surface of first support membrane 2. This can improve the mechanical strength of porous membrane laminate 20, suppress filtration clogging, and improve the capturing performance for fine particles (particle-capturing probability in fiber). It is noted that, first porous membrane 1 and second porous membrane 1 may have the same structure or different structures.

For example, as shown in FIG. 11, porous membrane laminate 20 comprises first porous membrane 1 formed of porous membrane 1, second porous membrane 1 formed of porous membrane 1, first support membrane 2 containing polytetrafluoroethylene as a main component, and second support membrane 2 containing polytetrafluoroethylene as a main component, and first porous membrane 1, second porous membrane 1, and second support membrane 2 can be arranged in this order on one main surface of first support membrane 2. This can improve the mechanical strength of porous membrane laminate 20, suppress filtration clogging, improve the capturing performance (particle-capturing probability in fiber) of fine particles, and suppress the particle-capturing performance from being lowered due to external damage. It is noted that, first porous membrane 1 and second porous membrane 1 may have the same structure or different structures. First support membrane 2 and second support membrane 2 may have the same structure or different structures.

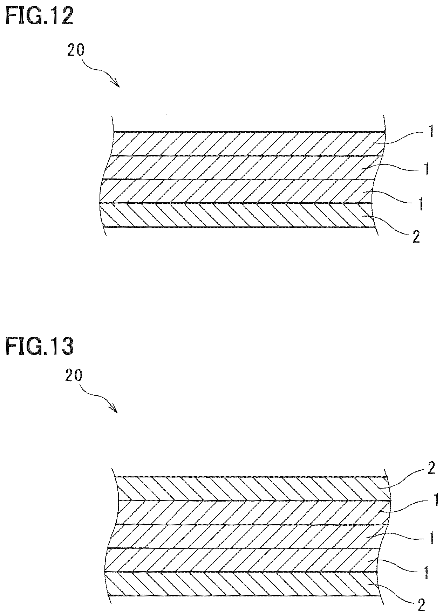

For example, as shown in FIG. 12, porous membrane laminate 20 comprises first porous membrane 1 formed of porous membrane 1, second porous membrane 1 formed of porous membrane 1, third porous membrane 1 formed of porous membrane 1, and first support membrane 2 containing polytetrafluoroethylene as a main component, and first porous membrane 1, second porous membrane 1, and third porous membrane 1 can be arranged in this order on one main surface of first support membrane 2. This can improve the mechanical strength of porous membrane laminate 20, suppress filtration clogging, and improve the capturing performance for fine particles (particle-capturing probability in fiber). It is noted that, first porous membrane 1, second porous membrane 1, and third porous membrane 1 may have the same structure or different structures.

For example, as shown in FIG. 13, porous membrane laminate 20 comprises first porous membrane 1 formed of porous membrane 1, second porous membrane 1 formed of porous membrane 1, third porous membrane 1 formed of porous membrane 1, first support membrane 2 containing polytetrafluoroethylene as a main component, and second support membrane 2 containing polytetrafluoroethylene as a main component, and first porous membrane 1, second porous membrane 1, third porous membrane 1, and second support membrane 2 can be arranged in this order on one main surface of first support membrane 2. This can improve the mechanical strength of porous membrane laminate 20, suppress filtration clogging, improve the capturing performance for fine particles (particle-capturing probability in fiber), and suppress the particle-capturing performance from being lowered due to external damage. It is noted that, first porous membrane 1, second porous membrane 1, and third porous membrane 1 may have the same structure or different structures. Further, first support membrane 2 and second support membrane 2 may have the same structure or different structures.

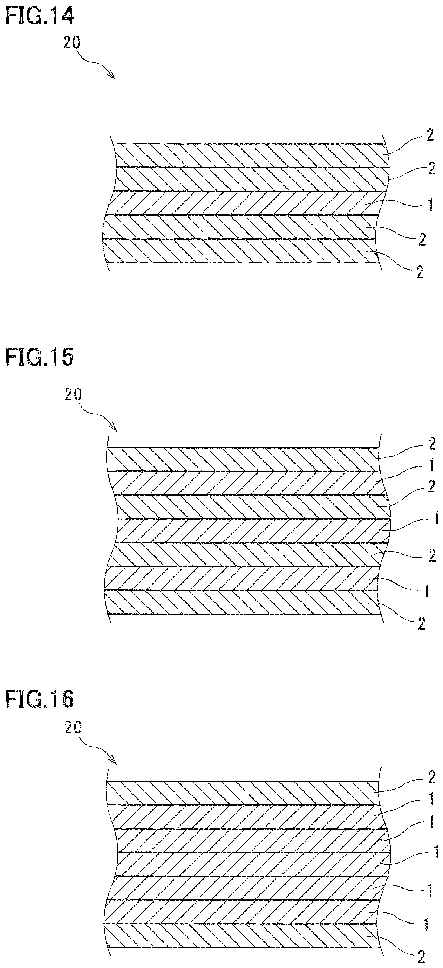

As shown in FIG. 14, porous membrane laminate 20 comprises first porous membrane 1 formed of porous membrane 1, first support membrane 2 containing polytetrafluoroethylene as a main component, second support membrane 2 containing polytetrafluoroethylene as a main component, third support membrane 2 containing polytetrafluoroethylene as a main component, and fourth support membrane 2 containing polytetrafluoroethylene as a main component, and second support membrane 2, first porous membrane 1, third support membrane 2, and fourth support membrane 2 can be arranged in this order on one main surface of first support membrane 2. This can improve the mechanical strength of porous membrane laminate 20, suppress filtration clogging, and suppress the particle-capturing performance from being lowered due to external damage. It is noted that, first support membrane 2, second support membrane 2, third support membrane 2, and fourth support membrane 2 may have the same structure or different structures.

As shown in FIG. 15, porous membrane laminate 20 comprises first porous membrane 1 formed of porous membrane 1, second porous membrane 1 formed of porous membrane 1, third porous membrane 1 formed of porous membrane 1, first support membrane 2 containing polytetrafluoroethylene as a main component, second support membrane 2 containing polytetrafluoroethylene as a main component, third support membrane 2 containing polytetrafluoroethylene as a main component, and fourth support membrane 2 containing polytetrafluoroethylene as a main component, and first porous membrane 1, second support membrane 2, second porous membrane 1, third support membrane 2, third porous membrane 1, and fourth support membrane 2 can be arranged in this order on one main surface of first support membrane 2. This can improve the mechanical strength of porous membrane laminate 20, suppress filtration clogging, and suppress the particle-capturing performance from being lowered by external damage. It is noted that, first porous membrane 1, second porous membrane 1, and third porous membrane 1 may have the same structure or different structures. Further, first support membrane 2, second support membrane 2, third support membrane 2, and fourth support membrane 2 may have the same structure or different structures.

For example, as shown in FIG. 16, porous membrane laminate 20 comprises first porous membrane 1 formed of porous membrane 1, second porous membrane 1 formed of porous membrane 1 third porous membrane 1 formed of porous membrane 1, fourth porous membrane 1 formed of porous membrane 1, fifth porous membrane 1 formed of porous membrane 1, first support membrane 2 containing polytetrafluoroethylene as a main component, and second support membrane 2 containing polytetrafluoroethylene as a main component, and first porous membrane 1, second porous membrane 1, third porous membrane 1, fourth porous membrane 1, fifth porous membrane 1, and second support membrane 2 can be arranged in this order on one main surface of first support membrane 2. This can improve the mechanical strength of porous membrane laminate 20, suppress filtration clogging, improve the capturing performance for fine particles (particle-capturing probability in fiber), and suppress the particle-capturing performance from being lowered due to external damage. It is noted that, first porous membrane 1, second porous membrane 1, third porous membrane 1, fourth porous membrane 1, and fifth porous membrane 1 may have the same structure or different structures. Further, first support membrane 2 and second support membrane 2 may have the same structure or different structures.

[Method of Manufacturing Porous Membrane Laminate]

An embodiment of the method of manufacturing the porous membrane laminate will be described, in the case where the porous membrane laminate includes for example the porous membrane and the support membrane. The method of manufacturing the porous membrane laminate includes a step of stacking the porous membrane.

(Stacking Step)

In this step, the porous membrane is stacked on, for example, one surface of the support membrane, and these are heated to form the porous membrane laminate.

Examples of the method of stacking the porous membrane on the support membrane include a method of fusing by heating, and a method of bonding with a glue or an adhesive.

As a method of fusing by heating, specifically, first, the porous membrane is stacked on, for example, one surface of a support membrane, and the laminate is heated to thermally fuse each layer at the boundary to integrate them, thereby obtaining the porous membrane laminate. The lower limit of the heating temperature is preferably 327°C, which is the glass transition point of PTFE, and more preferably 360°C. On the other hand, the upper limit of the heating temperature is preferably 400°C. When the heating temperature is lower than 327°C, the thermal fusion of each layer may be insufficient. On the other hand, when the heating temperature exceeds 400°C, each layer may be deformed. The heating time is preferably 0.5 minutes to 3 minutes.

As the glue or the adhesive in the method of bonding using the glue or the adhesive, a fluororesin or a fluororubber having solvent solubility or thermoplasticity is preferable from the viewpoint of heat resistance, chemical resistance, and the like.

(Hydrophilization Treatment)

The porous membrane laminate obtained as described above may be subjected to a hydrophilization treatment. The hydrophilization treatment is performed by impregnating a porous membrane laminate with a hydrophilic material and crosslinking the porous membrane laminate. Examples of the hydrophilic material include polyvinyl alcohol (PVA), ethylene-vinyl alcohol copolymer (EVOH), and acrylate resin. Among these, PVA is preferable because it is easily adsorbed in the fiber surface of PTFE and can be uniformly impregnated.

The hydrophilization treatment can be specifically performed, for example, by the following procedure. First, a porous membrane laminate is immersed in isopropyl alcohol (IPA) for 0.25 minutes to 2 minutes, and then immersed in a PVA aqueous solution having a concentration of 0.5 mass% to 0.8 mass% for 5 minutes to 10 minutes. Then, the porous membrane laminate is immersed in pure water for 2 minutes or more and 5 minutes or less, and then crosslinking is performed by adding crosslinking agent or irradiating electron beam. After the crosslinking, the porous membrane laminate is washed with pure water and dried at a temperature of room temperature (25°C) to 80°C, whereby the surface of the porous membrane laminate can be hydrophilized. It is noted that, as the crosslinking agent, for example, one which forms glutaraldehyde crosslinking, terephthalaldehyde crosslinking, or the like is used. Further, the electron beam can be, for example, a 6Mrad beam.

The porous membrane laminate has excellent capturing performance for fine particles by including one or plurality of porous membranes. Thus, the present invention is suitable for a microfiltration filter for a dispersion medium and a gas used for cleaning, peeling, chemical supply, and the like in semiconductor-associated fields, liquid crystal-related fields, and food medical related fields.

[Other Embodiments]

The embodiments disclosed herein are to be considered in all respects as illustrative and not restrictive. The scope of the present invention is not limited to the configurations of the above-described embodiments, but is defined by the scope of claims, and is intended to include all modifications within the meaning and scope equivalent to the scope of claims.

[Appendix 1]

A porous membrane containing polytetrafluoroethylene as a main component,

wherein a mean flow pore size E of the porous membrane is 75 nm or less, and
a pore size difference G - E between a maximum pore size G and the mean flow pore size E of the porous membrane is 20 nm or less.

[Appendix 2]

The porous membrane according to appendix 1, wherein the pore size difference between the maximum pore size G and the mean flow pore size E is 15 nm or less.

[Appendix 3]

The porous membrane according to appendix 1 or 2, wherein a percentage {(G - E)/E} × 100 of the pore size difference between the maximum pore size G and the mean flow pore size E relative to the mean flow pore size E is 35% or less.

[Appendix 4]

A porous membrane laminate including one or a plurality of porous membranes, the one or plurality of porous membranes each being the porous membrane according to any one of appendices 1 to 3,

wherein a mean flow pore size K of the porous membrane laminate is 75 nm or less, and
a pore size difference J - K between a maximum pore size J and the mean flow pore size K of the porous membrane laminate is 20 nm or less.

[Appendix 5]

The porous membrane laminate according to appendix 4, wherein a percentage {(J - K)/K} × 100 of the pore size difference between the maximum pore size J and the mean flow pore size K relative to the mean flow pore size K is 35% or less.

[Appendix 6]

The porous membrane laminate according to appendix 4 or 5, including one or a plurality of porous support membranes containing polytetrafluoroethylene as a main component,
wherein the one or plurality of support membranes are stacked on one surface or both surfaces of each of the one or plurality of porous membranes.

[Appendix 7]

The porous membrane laminate according to appendix 6, wherein each of the one or plurality of support membranes has a mean flow pore size of 200 nm or less.

[Appendix 8]

The porous membrane laminate according to appendix 6 or 7, including a plurality of the porous membranes and a plurality of the support membranes,
wherein the porous membranes and the support membranes are alternately stacked, and the support membranes are stacked on both ends of the porous membrane laminate.

[Appendix 9]

The porous membrane laminate according to any one of appendices 4 to 8, wherein the mean flow pore size K is 60 nm or less.

[Appendix 10]

A porous membrane laminate consisting of a first porous membrane formed of the porous membrane according to any one of appendices 1 to 3 and a second porous membrane formed of the porous membrane according to any one of appendices 1 to 3,
wherein the second porous membrane is disposed on a main surface of the first porous membrane.

[Appendix 11]

A porous membrane laminate consisting of a first porous membrane formed of the porous membrane according to any one of appendices 1 to 3, a first support membrane containing polytetrafluoroethylene as a main component, and a second support membrane containing polytetrafluoroethylene as a main component,
wherein the first porous membrane and the second support membrane are disposed in this order on a main surface of the first support membrane.

[Appendix 12]

A porous membrane laminate consisting of a first porous membrane formed of the porous membrane according to any one of appendices 1 to 3, a second porous membrane formed of the porous membrane according to any one of appendices 1 to 3, and a first support membrane containing polytetrafluoroethylene as a main component,
wherein the first porous membrane and the second porous membrane are disposed in this order on a main surface of the first support membrane.

[Appendix 13]

A porous membrane laminate consisting of a first porous membrane formed of the porous membrane according to any one of appendices 1 to 3, a second porous membrane formed of the porous membrane according to any one of appendices 1 to 3, a first support membrane containing polytetrafluoroethylene as a main component, and a second support membrane containing polytetrafluoroethylene as a main component,
wherein the first porous membrane, the second porous membrane, and the second support membrane are disposed in this order on a main surface of the first support membrane.

[Appendix 14]

A porous membrane laminate consisting of a first porous membrane formed of the porous membrane according to any one of appendices 1 to 3, a second porous membrane formed of the porous membrane according to any one of appendices 1 to 3, a third porous membrane formed of the porous membrane according to any one of appendices 1 to 3, and a first support membrane containing polytetrafluoroethylene as a main component,
wherein the first porous membrane, the second porous membrane, and the third porous membrane are disposed in this order on a main surface of the first support membrane.

[Appendix 15]

A porous membrane laminate consisting of a first porous membrane formed of the porous membrane according to any one of appendices 1 to 3, a second porous membrane formed of the porous membrane according to any one of appendices 1 to 3, a first support membrane containing polytetrafluoroethylene as a main component, a second support membrane containing polytetrafluoroethylene as a main component, and a third support membrane containing polytetrafluoroethylene as a main component,
wherein the first porous membrane, the second support membrane, the second porous membrane, and the third support membrane are disposed in this order on a main surface of the first support membrane.

[Appendix 16]

A porous membrane laminate consisting of a first porous membrane formed of the porous membrane according to any one of appendices 1 to 3, a second porous membrane formed of the porous membrane according to any one of appendices 1 to 3, a third porous membrane formed of the porous membrane according to any one of appendices 1 to 3, a first support membrane containing polytetrafluoroethylene as a main component, and a second support membrane containing polytetrafluoroethylene as a main component,
wherein the first porous membrane, the second porous membrane, the third porous membrane, and the second support membrane are disposed in this order on a main surface of the first support membrane.

[Appendix 17]

A porous membrane laminate consisting of a first porous membrane formed of the porous membrane according to any one of appendices 1 to 3, a first support membrane containing polytetrafluoroethylene as a main component, a second support membrane containing polytetrafluoroethylene as a main component, a third support membrane containing polytetrafluoroethylene as a main component, and a fourth support membrane containing polytetrafluoroethylene as a main component,

wherein the second support membrane, the first porous membrane, the third support membrane, and the fourth support membrane are disposed in this order on a main surface of the first support membrane.

[Appendix 18]

A porous membrane laminate consisting of a first porous membrane formed of the porous membrane according to any one of appendices 1 to 3, a second porous membrane formed of the porous membrane according to any one of appendices 1 to 3, a third porous membrane formed of the porous membrane according to any one of appendices 1 to 3, a first support membrane containing polytetrafluoroethylene as a main component, a second support membrane containing polytetrafluoroethylene as a main component, a third support membrane containing polytetrafluoroethylene as a main component, and a fourth support membrane containing polytetrafluoroethylene as a main component,

wherein the first porous membrane, the second support membrane, the second porous membrane, the third support membrane, the third porous membrane, and the fourth support membrane are disposed in this order on a main surface of the first support membrane.

[Appendix 19]

A porous membrane laminate consisting of a first porous membrane formed of the porous membrane according to any one of appendices 1 to 3, a second porous membrane formed of the porous membrane according to any one of appendices 1 to 3, a third porous membrane formed of the porous membrane according to any one of appendices 1 to 3, a fourth porous membrane formed of the porous membrane according to any one of appendices 1 to 3, a fifth porous membrane formed of the porous membrane according to any one of appendices 1 to 3, a first support membrane containing polytetrafluoroethylene as a main component, and a second support membrane containing polytetrafluoroethylene as a main component,

wherein the first porous membrane, the second porous membrane, the third porous membrane, the fourth porous membrane, the fifth porous membrane, and the second support membrane are disposed in this order on a main surface of the first support membrane.

[Example]

The present invention will be described in more detail with reference to the following examples, but the present invention is not limited to these examples.

<Porous Membrane Laminate>

[Test No. 1 and Test No. 2]

(Forming Step)

As a raw material powder, PTFE fine powder A (second amount of heat of fusion 15.8 J/g, molecular weight about 28 million) shown in Table 1 was used. PTFE fine powder A used here is a powder obtained by drying and granulating a product (emulsion-polymerized product) formed of PTFE particles (primary particles) produced by emulsion polymerization of tetrafluoroethylene. The specific weight of PTFE fine powder A and the results of differential scanning calorimetry using a differential scanning calorimeter ("DSC-60A" manufactured by Shimadzu Corporation) are shown in Table 1. It is noted that, the differential scanning calorimetry with the differential scanning calorimeter was performed by the above-described method.

The PTFE fine powder and solvent naphtha ("super sol FP-25" manufactured by Idemitsu Petrochemical Co., Ltd., boiling point 50°C to 180°C) as a liquid lubricant were kneaded at a ratio of 100 parts by mass and 18 parts by mass, respectively. Next, the kneaded product was put into a forming machine and compression-molded to obtain a block like molding. Next, the block like molding was continuously extrusion-molded into a sheet form, and then passed through a rolling roller, and further passed through a heating roll (130°C to 220°C) for removing the liquid lubricant, and wound around a roll, thereby forming a PTFE sheet having an average thickness of 320 $\mu$m. Next, the film was stretched 4 times in the longitudinal direction (flow direction) at a roll temperature of 250°C to 280°C. Subsequently, both ends of the film in the width direction after the longitudinal stretching were held by chucks, and the film was stretched 25 times in the lateral direction, which is a direction perpendicular to the flow direction, under an atmosphere of 150°C. The film was held at 285°C for 0.25 to 1 minute as it was, and heat fixing was performed. By this stretching, a porous membrane of Test No. 1 and Test No. 2 having a thickness of 7 $\mu$m was obtained.

The stretched sheet was sintered for 1.5 minutes by passing through a heating furnace at 360°C and porous membranes of Test No. 1 and Test No. 2 were obtained.

Next, a PTFE sheet was prepared as a support membrane by the following procedure using PTFE fine powder (second amount of heat of fusion 26.0 J/g, molecular weight about 5 million) as a raw material powder. Next, the PTFE fine powder and solvent naphtha ("super sol FP-25" manufactured by Idemitsu Petrochemical Co., Ltd.) as a liquid lubricant were kneaded at a ratio of 100 parts by mass and 23 parts by mass, respectively. Next, the kneaded product was put into a forming machine and compression-molded to obtain a block like molding. Next, the block like molding was continuously extrusion-molded into a sheet form, and then passed through a rolling roller, and further passed through a heating roll (130°C to 220°C) for removing the liquid lubricant, and wound around a roll, thereby forming a PTFE sheet having an average thickness of 320 $\mu$m. Next, the film was stretched 3.5 times in the longitudinal direction (flow direction) at a roll temperature of 250°C to 280°C. Subsequently, both ends in the width direction of the film after the longitudinal stretching were held by chucks, and the film was stretched to 23 times in the lateral direction, which is a direction perpendicular to the flow direction, under an atmosphere of 150°C. As it was, the film was held at 285°C for 0.25 to 1 minute to perform heat fixing. The stretched sheet was sintered for 1.5 minutes by passing through a heating furnace at 360°C. As a result, a support membrane having an average thickness of 8 $\mu$m, a maximum pore size 235 nm, a mean flow pore size 194 nm, a pore size ratio of 21.1%, and a Gurley number of 13 seconds was obtained.

Next, as shown in FIG. 3, porous membrane laminates of Test No. 1 and Test No. 2 having a five layers structure including two layers of support membranes, two layers of porous membranes disposed between the pair of support membranes, and one layer of support membrane stacked between the pair of porous membranes were produced. In the step of stacking the porous membranes of Test No. 1 and Test No. 2 on the support membrane, the porous membranes of Test No. 1 and Test No. 2 and the support membrane were stacked respectively, and heated at 370°C for 100 seconds to integrate the layers by heat sealing the boundaries of the layers. The average thickness of the porous membrane laminate of Test No. 1 was 34 $\mu$m. The average thickness of the porous membrane laminate of Test No. 2 was 36 $\mu$m.

[Test No. 3]

A porous membrane laminate of Test No. 3 having an average thickness of 45 $\mu$m was obtained by the same process as for the porous membrane laminate of Test No. 1, except that PTFE fine powder B (second amount of heat of fusion 17.0 J/g, molecular weight about 23 million) having the specific weight and the differential scanning calorimetry results shown in Table 1 was used as the raw material powder, and that solvent naphtha as a liquid lubricant was kneaded at a ratio of 16 parts by mass with respect to 100 parts by mass of the PTFE fine powder, and that the longitudinal stretching was performed at a stretching ratio of 6 times and the lateral stretching was performed at a stretching ratio of 25 times.

[Test No. 4]

A porous membrane laminate of Test No. 4 having an average thickness of 31 $\mu$m was obtained by the same process as for the porous membrane laminate of No. 1, except that PTFE fine powder C (second amount of heat of fusion 16.8 J/g, molecular weight about 22 million) having the specific weight and differential scanning calorimetry results shown in Table 1 was used as the raw material powder, and that solvent naphtha as a liquid lubricant was kneaded at a ratio of 16 parts by mass with respect to 100 parts by mass of the PTFE fine powder, and that the longitudinal stretching was performed at a stretching ratio of 4 times and the lateral stretching was performed at a stretching ratio of 21 times.

<Evaluation>

[Thermal Analysis of Raw Material by Differential Scanning Calorimeter]

In the differential scanning calorimetry, measurement was performed by the following method using a differential scanning calorimeter. The sample was heated from room temperature to 380°C at a rate of 10°C/min (pattern 1 (first run)), then cooled from 380°C to 100°C at a rate of -1 °C/min (pattern 2), and then heated from 100°C to 380°C at a rate of 10°C/min (pattern 3 (second run)). The heat absorbing amount obtained by integrating the section of 48°C with the endset temperature of the peak in the range of 300°C to 360°C of the melting curve of pattern 1 as the starting point was defined as the first amount of heat of fusion. In addition, similarly to the first amount of heat of fusion, the heat absorbing amount obtained by integrating the section of 48°C with the endset temperature of the peak in a range of 300°C to 360°C of the melting curve of pattern 3 as a starting point was defined as a second amount of heat of fusion.

[Pore Size Difference and Pore Size Ratio]

The pore size ratios of the porous membranes and the porous membrane laminates of Test No. 1 to Test No. 4 were calculated by the following procedure. First, the pore-size distribution of the porous membranes and porous membrane laminates of Test No. 1 to Test No. 4 was measured with a fine pore size distribution analyzer (Perm-Porometer "CFP-1500A" manufactured by PMI) using propylene, 1,1,2,3,3,3-hexahydrofluoric acid oxide ("GALWICK" manufactured by PMI) having a surface tension of 15.9 mN/m as a test agent in accordance with ASTM F316-03, JIS-K3832 (1990). Then, the maximum pore size [nm] and the mean flow pore size [nm] were obtained from the pore-size distribution, and the pore size difference and the pore size ratio were calculated from the following equation. The larger the pore size ratio means the larger the variation in the pore size of the porous membrane.

Pore size difference [nm] of porous membrane = maximum pore size G - mean flow pore size E Pore size difference [nm] of porous membrane laminate = maximum pore size J - mean flow pore size K

$$\text{Pore size ratio [\%] of porous membrane} = \{(G - E)/E\} \times 100$$

$$\text{Pore size ratio [\%] of porous membrane laminate} = \{(J - K)/K\} \times 100$$

[Gurley Number]

The Gurley number [sec] of the porous membranes and the porous membrane laminates of Test No. 1 to Test No. 4 was measured by the above-described method.

[Capturing Rate for Polystyrene Particles]

The capturing rate for polystyrene particles [%] of the porous membrane laminates of Test No. 1 to Test No. 4 was measured by passing an aqueous solution of 0.1% octoxynol ("Triton X-100" manufactured by The Dow Chemical Company) containing polystyrene particles G40 (nominal diameter 0.04 $\mu$m) manufactured by Thermo Fisher Scientific having a concentration of 12 ppb, and collecting a filtrate after passing through 500 ml. Then, the concentration of the polystyrene particles in the filtrate was calculated from the fluorescence light intensity of the filtrate of the polystyrene particles measured by a fluorescence spectrophotometer ("fluorescence spectrophotometer RF-6000" manufactured by Shimadzu Corporation). The particle holding rate was then calculated from the following equation.

Particle holding rate [%] = {([concentration of polystyrene particles in feed liquid] - [concentration of polystyrene particles in filtrate]) / [concentration of polystyrene particles in feed liquid]} $\times$ 100

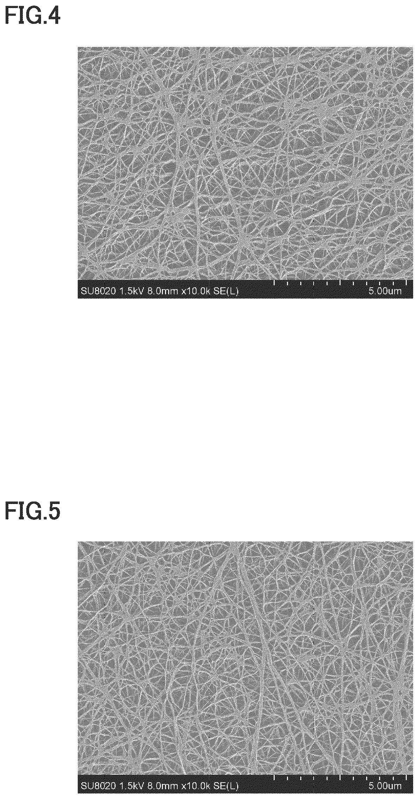

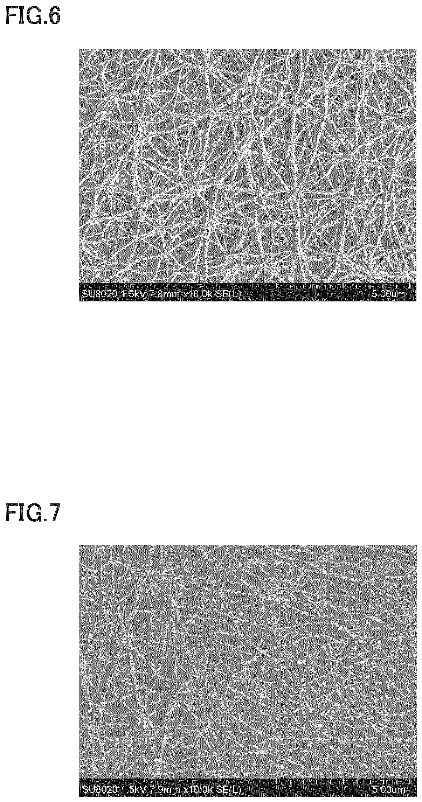

Table 1 shows the mean flow pore size, pore size ratio, and Gurley number of the porous membranes and the porous membrane laminates of Test No. 1 to Test No. 4, and the evaluation results of the capturing rate for polystyrene particles of the porous membrane laminate. Further, FIG. 4 shows a surface image of the porous membrane of Test No. 1 taken by using a scanning electron microscope, FIG. 5 shows a surface image of the porous membrane of Test No. 2 taken by using a scanning electron microscope, and FIG. 6 shows a surface image of the porous membrane of Test No. 3 taken by using a scanning electron microscope. FIG. 7 shows a surface image of the porous membrane of Test No. 4 taken by using a scanning electron microscope.

[Table 1]

Table 1

| Section | | Parameter | | Unit | Test 1 | Test 2 | Test 3 | Test 4 |
|---|---|---|---|---|---|---|---|---|
| Porous Membrane Laminate (Two Layers of Porous Membrane and Three Layers of Support Membrane) | | Capturing Rate for Polystyrene Particles | | [%] | 34 | 36 | 19 | 29 |
| | | Gurley Number | | [Second] | 61 | 89 | 38 | 55 |
| | | Average Thickness | | [μm] | 34 | 39 | 31 | 45 |
| | Pore-Size Distribution | Pore Size Ratio | $[(J-K)/K] \times 100$ | [%] | 30.8 | 32.5 | 25.5 | 43.5 |
| | | Pore Size Difference | $J-K$ | [nm] | 16.7 | 17.2 | 19.4 | 24.4 |
| | | Mean Flow Pore Size | $K$ | [nm] | 54.2 | 53.0 | 76.1 | 56.1 |
| | | Maximum Pore Size | $J$ | [nm] | 70.9 | 70.2 | 95.5 | 80.5 |
| Support Membrane | | Average Thickness | | [μm] | 8 | 8 | 8 | 8 |
| Porous Membrane | | Gurley Number | | [Second] | 10 | 13 | 20 | 8 |
| | | Average Thickness | | [μm] | 7 | 7 | 5 | 7 |
| | Pore-Size Distribution | Pore Size Ratio | $[(G-E)/E] \times 100$ | [%] | 24.6 | 21.3 | 17.7 | 48.2 |
| | | Pore Size Difference | $G-E$ | [nm] | 17.0 | 14.5 | 18.9 | 36.2 |
| | | Mean Flow Pore Size | $E$ | [nm] | 69.0 | 68.2 | 106.2 | 75.1 |
| | | Maximum Pore Size | $G$ | [nm] | 85.9 | 82.7 | 125.1 | 111.3 |
| Raw Material PTFE Powder | Thermal Analysis of Raw Material (DSC) — Second Run (300~360°C) | Second Amount of Heat of Fusion | | [J/g] | 15.8 | 15.8 | 17.0 | 16.8 |
| | | Peak Difference between Endset and Onset | | [°C] | 13.0 | 13.0 | 8.3 | 9.3 |
| | First Run (300~360°C) | First Amount of Heat of Fusion | | [J/g] | 63.3 | 63.3 | 65.7 | 56.9 |
| | | Peak Difference between Endset and Onset | | [°C] | 10.1 | 10.1 | 8.5 | 20.3 |
| | | Specific Gravity | | | 2.14 | 2.14 | 2.16 | 2.14 |
| | | Raw Material Type | | | PTFE Fine Powder A | PTFE Fine Powder A | PTFE Fine Powder B | PTFE Fine Powder C |
| | | Test No. | | | 1 | 2 | 3 | 4 |

16

As shown in Table 1, the porous membrane laminates of Test No. 1 and Test No. 2 including porous membranes, which had mean flow pore size E of 75 nm or less and a difference between maximum pore size G and mean flow pore size E (pore size difference G - E) of 20 nm or less, exhibited a higher capturing rate for polystyrene particles than the porous membrane laminate of Test No. 3 including the porous membrane, which had mean flow pore size E of more than 75 nm, and the porous membrane laminate of Test No. 4 including the porous membrane, which had pore size difference G - E of more than 20 nm. Further, as shown in FIGS. 4 to 6, the porous membranes of Test No. 1 and Test No. 2 have smaller gaps between fibers in a cross-sectional view and smaller variations in the size of the gaps, as compared with the porous membranes of Test No. 3 and Test No. 4. This is considered that pore size difference G - E of the porous membranes of Test No. 1 and Test No. 2 is narrower than that of the porous membranes of Test No. 3 and Test No. 4.

The above results indicate that the porous membrane laminate including the porous membrane has excellent capturing performance for fine particles. Thus, the porous membrane laminate can be suitably used as a filter or the like which requires a high filtration treatment performance.

REFERENCE SIGNS LIST

1 porous membrane, 2 support membrane, 10, 20 porous membrane laminate.

**Claims**

1. A porous membrane comprising polytetrafluoroethylene as a main component,

   wherein a mean flow pore size E of the porous membrane is 75 nm or less, and
   a pore size difference G - E between a maximum pore size G and the mean flow pore size E of the porous membrane is 20 nm or less.

2. The porous membrane according to claim 1, wherein the pore size difference between the maximum pore size G and the mean flow pore size E is 15 nm or less.

3. The porous membrane according to claim 1 or 2, wherein a percentage $\{(G - E)/E\} \times 100$ of the pore size difference between the maximum pore size G and the mean flow pore size E relative to the mean flow pore size E is 35% or less.

4. A porous membrane laminate comprising one or a plurality of porous membranes, the one or plurality of porous membranes each being the porous membrane according to any one of claims 1 to 3,

   wherein a mean flow pore size K of the porous membrane laminate is 75 nm or less, and
   a pore size difference J - K between a maximum pore size J and the mean flow pore size K of the porous membrane laminate is 20 nm or less.

5. The porous membrane laminate according to claim 4, wherein a percentage $\{(J - K)/K\} \times 100$ of the pore size difference between the maximum pore size J and the mean flow pore size K relative to the mean flow pore size K is 35% or less.

6. The porous membrane laminate according to claim 4 or 5, comprising one or a plurality of porous support membranes containing polytetrafluoroethylene as a main component,
   wherein the one or plurality of support membranes are stacked on one surface or both surfaces of each of the one or plurality of porous membranes.

7. The porous membrane laminate according to claim 6, wherein each of the one or plurality of support membranes has a mean flow pore size of 200 nm or less.

8. The porous membrane laminate according to claim 6 or 7, comprising a plurality of the porous membranes and a plurality of the support membranes,
   wherein the porous membranes and the support membranes are alternately stacked, and the support membranes are stacked on both ends of the porous membrane laminate.

9. The porous membrane laminate according to any one of claims 4 to 8, wherein the mean flow pore size K is 60 nm or less.

FIG.1

FIG.2

FIG.3

FIG.4

FIG.5

FIG.6

FIG.7

FIG.8

FIG.9

20

2
1
2

FIG.10

20

1
1
2

FIG.11

20

2
1
1
2

FIG.12

20

FIG.13

20

FIG.14

FIG.15

FIG.16

## INTERNATIONAL SEARCH REPORT

International application No.

**PCT/JP2022/039923**

### A. CLASSIFICATION OF SUBJECT MATTER

**B01D 69/00**(2006.01)i; **B01D 69/10**(2006.01)i; **B01D 69/12**(2006.01)i; **B01D 71/36**(2006.01)i; **C08J 9/00**(2006.01)i
FI:   B01D71/36; B01D69/00; B01D69/10; B01D69/12; C08J9/00 A CEW

According to International Patent Classification (IPC) or to both national classification and IPC

### B. FIELDS SEARCHED

Minimum documentation searched (classification system followed by classification symbols)

B01D69/00; B01D69/10; B01D69/12; B01D71/36; C08J9/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2013-237808 A (SUMITOMO ELECTRIC FINE POLYMER INC.) 28 November 2013 (2013-11-28) | 1-3 |
|  | claims, paragraphs [0018], [0040], examples, comparative examples 1, 3 |  |
| Y |  | 1-9 |
| X | WO 2013/153989 A1 (SUMITOMO ELECTRIC FINE POLYMER INC.) 17 October 2013 (2013-10-17) | 1-3 |
|  | claims, paragraph [0036], examples |  |
| Y |  | 1-9 |
| Y | JP 2012-45524 A (FUJIFILM CORP.) 08 March 2012 (2012-03-08) | 1-9 |
|  | claims, paragraphs [0018], [0019], [0025]-[0027], examples |  |
| Y | JP 2010-94579 A (SUMITOMO ELECTRIC FINE POLYMER INC.) 30 April 2010 (2010-04-30) | 1-9 |
|  | claims, examples |  |

☐ Further documents are listed in the continuation of Box C.   ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 December 2022** | **10 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2022/039923**

| Patent document cited in search report | | | Publication date (day/month/year) | Patent family member(s) | | | Publication date (day/month/year) |
|---|---|---|---|---|---|---|---|
| JP | 2013-237808 | A | 28 November 2013 | (Family: none) | | | |
| WO | 2013/153989 | A1 | 17 October 2013 | US | 2015/0079392 | A1 | |
| | | | | claims, paragraph [0042], examples | | | |
| | | | | EP | 2837653 | A1 | |
| | | | | CN | 104220500 | A | |
| JP | 2012-45524 | A | 08 March 2012 | (Family: none) | | | |
| JP | 2010-94579 | A | 30 April 2010 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022007435 A

- JP 2010094579 A